# EUROPEAN PATENT APPLICATION

(11) **EP 2 993 361 A1**
(43) Date of publication of application: **09.03.2016**
(21) Application number: 14183264.2
(22) Date of filing: 02.09.2014
(51) Int. Cl.: F16B 39/02, F16B 39/10

(54) **Method and device for locking screws**

(71) Applicant: Caterpillar Energy Solutions GmbH, 68167 Mannheim (DE)
(72) Inventor: Guisasola, Íñigo, 76829 Landau in der Pfalz (DE)
(74) Representative: Kramer Barske Schmidtchen Patentanwälte PartG mbB

(57) **Abstract**

The present disclosure generally relates to a method ad an anti-rotation devie (40) for locking at least two mounting screws (34) against rotation. The at least two mounting screws (34) may be configured to connect a first member (30) to a second member (20), wherein each of the two mounting screws (34) may have a screw head (36). The disclosed method may comprise engaging an anti-rotation member (42) with an associated screw head (36), and connecting the anti-rotation members (42) to one another for locking each of the at least two mounting screws (34) against rotation.

## Description

### Technical Field

The present disclosure generally relates to a method and device for locking a plurality screws and, particularly, to a method and device for mechanically locking screws against rotation.

### Background

For locking screws, it is known to apply, for example, a screw glue onto the screw threads and then the screw may be screwed into a tapped hole. The applied screw glue may then cure and a rotationally locked screw connection may be achieved. When disassembling such screw connection, the cured screw glue may be destroyed such that the screw may not be re-used again.

WO 2012/131215 A1 discloses an engine flywheel equipped with means for retaining bolts that attach the flywheel to a crankshaft. An inertia wheel is intended to be fixed to the end of the crankshaft by bolts fitted into orifices of the inertia wheel. The means for retaining the bolts comprise deformable means extending radially in the orifices for the passage of the bolts and pressing against the bolts in order to keep them in axial position.

The present disclosure is directed, at least in part, to improving or overcoming one or more aspects of prior systems.

### Summary of the Disclosure

According to an aspect of the present disclosure, a method for locking at least two mounting screws against rotation is disclosed. The at least two mounting screws may be configured to connect a first member to a second member, wherein each of the two mounting screws may have a screw head. The disclosed method may comprise engaging an anti-rotation member with an associated screw head, and connecting the anti-rotation members to one another for locking each of the at least two mounting screwsagainst rotation.

According to another aspect of the present disclosure, an anti-rotation device for locking at least two mounting screws against rotation is disclosed. The at least two mounting screws may be configured to connect a first member to a second member, wherein each of the two mounting screws may have a screw head. The disclosed anti-rotation device may comprise at least two anti-rotation members each configured to engage an associated screw head, and a connecting member connecting the at least two anti-rotation members to one another, such that the at least two anti-rotation members are aligned to one another. The anti-rotation members may need to be aligned to one another such that each of the anti-rotation members may engage an associated screw head.

In some embodiments, the step of connecting the anti-rotation members to one another may include inserting each of the anti-rotation members into an associated recess provided in a connecting member for positioning the anti-rotation members to one another.

In some embodiments, the connecting member may include at least two recesses accommodating an associated anti-rotation member therein.

Other features and aspects of this disclosure will be apparent from the following description and the accompanying drawings.

### Brief Description of the Drawings

Fig. 1 illustrates a sectional view of a torsional damping device attached to a crankshaft of an internal combustion engine via a flange element using mounting screws locked against rotation by an exemplary disclosed anti-rotation device;
Fig. 2 illustrates an enlarged view of a portion II of Fig. 1 showing the exemplary disclosed anti-rotation device in greater detail;
Fig. 3 illustrates a top view of the exemplary disclosed anti-rotation device mounted to mounting screws for mechanically locking the same against rotation; and
Fig. 4 illustrates a sealing member configured to be disposed at the mounting screws.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that at least two mounting screws may be locked against rotation by engaging each of the screw heads of the at least two mounting screws with an associated anti-rotation member and connecting the at least two anti-rotation members with each other. This may mechanically lock each of the two mounting screws against rotation.

Particularly, the present disclosure may be based at least in part on the realization that positioning at least two anti-rotation members in associated screw heads of at least two mounting screws and connecting the at least two anti-rotation members to one another may prevent each of the two mounting screws from rotation and, hence, may mechanically lock the mounting screws against rotation.

In the following, the method and device for locking at least two mounting screws against rotation of the present disclosure is described with respect to a connection between a torsional damping device 10 and a crankshaft 20 of an internal combustion engine. However, the exemplary disclosed method and device for locking at least two mounting screws against rotation may be applied to any screw connection where at least two screws connect two members to one another.

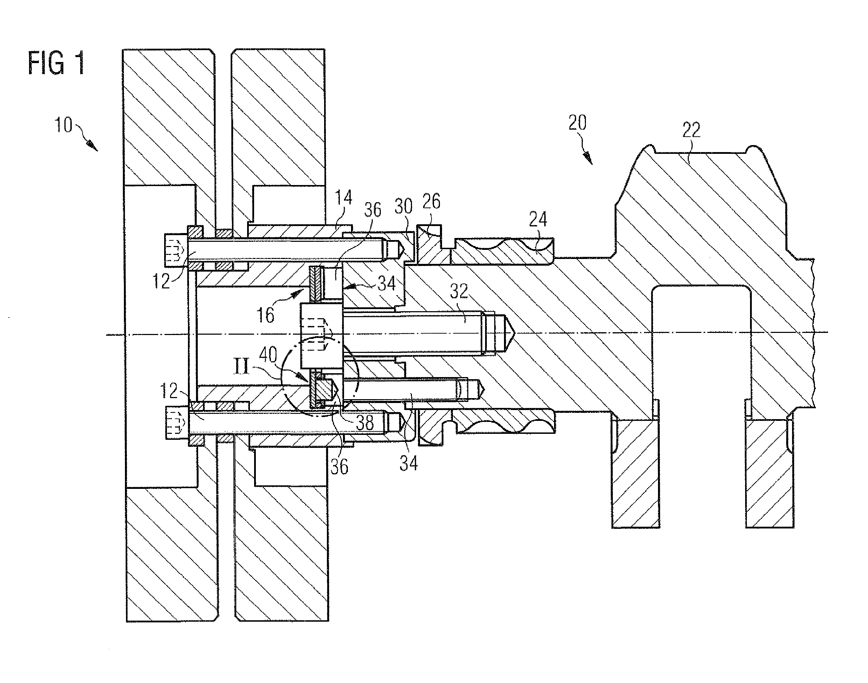

Referring to Fig. 1, a sectional view of the torsional damping device 10 attached to the crankshaft 20 of an internal combustion engine via a flange member 30 is shown. Particularly, as illustrated in Fig. 1, the flange member 30 is attached to the crankshaft 20 via a central attaching screw 32 and a plurality of mounting screws 34. In the exemplary embodiment shown in Fig. 1, there are provided in total nine mounting screws 34, which are symmetrically disposed on a circle extending about the attaching screw 32. Therefore, the sectional view of Fig. 1 only depicts one mounting screw 34 in a cut state, whereas another screw head of a further mounting screw 34 is illustrated, which lies behind the sectional plane of Fig. 1. In some embodiments, there may be provided more or less than nine mounting screws 34.

Each of the mounting screws 34 includes a screw head 36 provided with, in the exemplary embodiment shown in the drawings, an inner hexagonal socket 38. In some embodiments, at least one of the screw heads 36 may have an inner star socket. In some further embodiments, at least one of the screw heads 36 may have an outer hexagonal head, an outer star head, or any other known shape for fastening the mounting screws 34.

As further depicted in Fig. 1, the torsional damping device 10 is mounted to the flange member 30 via a plurality of bolts 12. Specifically, a further mounting member 14 is interposed between the torsional damping device 10 and the flange member 30.

The crankshaft 20 includes a crankshaft journal 22 to which a connecting rod (not shown) connecting to a piston may be mounted. An annular gear member 24 configured to drive a camshaft (not shown) is mounted to the crankshaft 20 via, for example, shrink fit. A further gear member 26 configured to drive, for instance, an oil pump (not shown) is mounted to the crankshaft.

During operation of the internal combustion engine (not shown in the drawings), the crankshaft 20 with the attached torsional damping device 10 may be exerted to vibrations or alternating loads. Such vibrations or alternating loads may cause, for instance, the mounting screws 34 to at least partially unfasten, such that the mounting screws 34 are no more tightened as desired, for instance, tightened with a predetermined and desired torque or force.

In Fig. 1, an anti-rotation device 40 is mounted to the screw heads 36 of the mounting screws 34. The anti-rotation device 40 is configured to mechanically lock the mounting screws 34 against rotation and may prevent unfastening of each of the mounting screws 34

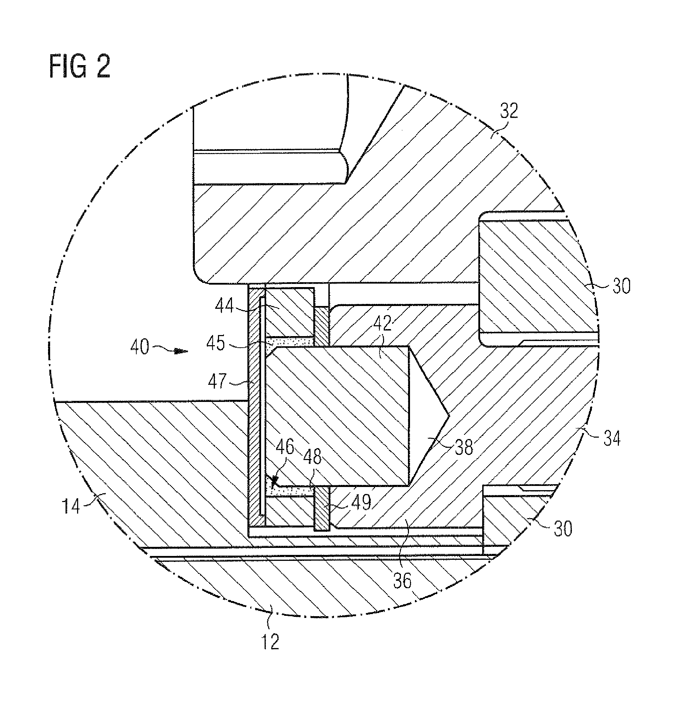

With respect to Fig. 2, an enlarged view of the portion II of Fig. 1 is illustrated. As can be seen in Fig. 2, the anti-rotation device 40 is mounted to the mounting screws 34. The anti-rotation device 40 includes anti-rotation members 42 inserted into an associated inner hexagonal socket 38 of a mounting screw 34. The anti-rotation member 42 has a hexagonal shape substantially corresponding with the inner hexagonal socket 38 such that, when engaging the inner hexagonal socket 38, the anti-rotation member 42 contacts the circumferential wall of the inner hexagonal socket 38 at at least two sides. In some embodiments, the anti-rotation members 42 may include a cuboid shape contacting at least two opposing surfaces of the circumferential inner wall of the inner hexagonal socket 38.

The anti-rotation device 40 may be configured to lock the mounting screws 34 against rotation which may have a size ranging from, for example, M4 to M36 and, in some embodiments, up to M52 or greater.

As depicted in Fig. 2, when engaging the inner hexagonal socket 38, the anti-rotation member 42 at least partially protrudes out of the inner hexagonal socket 38 along a longitudinal axis of the associated mounting screw 34. The anti-rotation device 40 further includes a connecting member 44 having a plurality of recesses 45 configured receive an associated anti-rotation member 42 projecting from an associated screw head 36. As indicated in Fig. 2, the connecting member 42 is an annular plate-shaped disk extending around the screw head of the attaching screw 32.

Each recess 45 is configured to loosely receive and accommodate an associated anti-rotation member 42, such that there may be a clearance 46 between a circumferential wall of the recess 45 and the associated anti-rotation member 42. A potting material 48 is then potted within each of the clearances 46 for connecting the connecting member 44 with each of the plurality anti-rotation members 42. The potting material 48 is indicated as a dotted portion in Fig. 2.

During the potting process, the potting material 48 may have a viscosity suitable for flowing into and filling the clearance 46. Then, when the clearance 46 is filled with the potting material 48, the potting material 48 may cure such that a rigid connection between the connecting member 44 and each anti-rotation member 42 is achieved, thereby forming the anti-rotation device 40.

The potting material 48 may be, for example, liquid metal, cast iron, a glue, an epoxy resin, or any other suitable material for potting into the clearances 46, which may then cure and connet the anti-rotation members 42 to the connecting member 44. In some embodiments, the potting material 48 may be constituted by a welding. In such case, the anti-rotation member 42 may be welded to the connecting member 42. The anti-rotation member 42 may be made of, for instance, an epoxy resin, a metal, such as steel, iron, alumina, or any alloy, and any synthetics. The connecting member 44 may be made of, for instance, an epoxy resin, a metal, such as steel, iron, alumina, or any alloy, and any synthetics.

As further indicated in Fig. 2, a sealing member 49 is positioned between the connecting member 44 and an associated screw head 36. Particularly, the sealing member 49 may closely circumferentially extend about an associated anti-rotation member 42 and may be configured to seal the clearance 46 from the inner hexagonal socket 38, such that the potting material 48 is prevented from getting in contact with the screw head 36 and the inner hexagonal socket 38. This may ensure that, after performing the potting process and curing the potting material 48, the anti-rotation device 40 may not be connected to the screw heads 36 any may be easily detached from the plurality of mounting screws 34.

In the embodiment shown in Fig. 2, the sealing member 49 is a plate-shaped disk extending about an associated anti-rotation member 42. In some embodiments, the sealing member 49 may be, for instance, a sealing ring, a sealing shim, or any other member suitable for sealing the clearance 46 from the inner hexagonal socket 38].

When being mounted to the screw heads 36, the anti-rotation device 40 locks each of the mounting screws 34 against rotation. For preventing that the anti-rotation device 40 falls off the screw heads 36 caused by, for example, vibrations or alternating loads of the crankshaft 20, a support member 47 is sandwiched between the anti-rotation device 40 and the mounting member 14, especially between the anti-rotation device 40 and a stepped portion 16 of the mounting member 14 (see Fig. 1). The support member 47 is configured to limit axial backlash of the anti-rotation device 40.

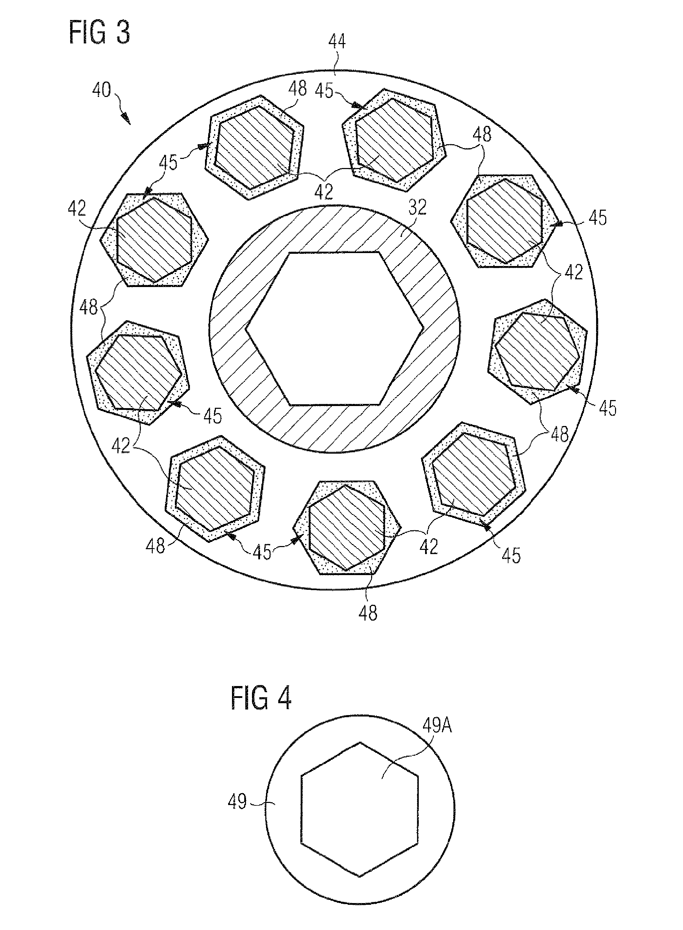

Referring to Fig. 3, a top view of the anti-rotation device 40 mounted to mounting screws 34 is illustrated. As shown in Fig. 3, the connecting member 44 circumferentially extends about the attaching screw 32. In the exemplary embodiments shown in the drawings, as the flange member 30 is connected to the crankshaft 20 by in total nine mounting screws 34 symmetrically disposed on a circle extending about the attaching screw 42, there are accordingly nine anti-rotation members 42 connected to the connecting member 44 by the potting material 48. The positions of the recesses 45 correspond to the positions of the screw heads 36.

In the exemplary embodiment shown in Fig. 3, the plurality of recesses 45 of the connecting member 44 have a hexagonal shape. In some embodiments, the recesses 45 may have any shape suitable for at least partially receiving and accommodating an associated anti-rotation member 42 irrespective of its alignment with respect to the associated recess 45. That means, prior potting the potting material 48, the recesses 45 may allow the associated anti-rotation member 42 to be freely rotated within the recess 45.

With respect to Fig. 4, a top view of a sealing member 49 is illustrated. As shown in Fig. 4, the sealing member 49 has an opening 49A substantially corresponding to the shape of an associated anti-rotation member 42. In the exemplary embodiment shown in the drawings, as the anti-rotation members 42 have a hexagonal shape, the opening 49A also has a hexagonal shape.

By providing in total nine anti-rotation members 42, there may accordingly be provided nine sealing members 49, one for each anti-rotation member 42. After the potting process, the sealing members 49 may also be connected to the connecting member 44. In some embodiments, the sealing members 49 may not be connected to the connecting member 44 and may be removed.

### Industrial Applicability

The exemplary disclosed method and device for rotationally locking mounting screws 34 is substantially based on engaging anti-rotation members 42 with screw heads 36 of the mounting screws 34 to be locked against rotation. In the exemplary embodiment shown in the drawings, each of the mounting screws 34 include a screw head 36 with an inner hexagonal socket 38. Therefore, the anti-rotation members 42 have a hexagonal shape for being inserted in an associated inner hexagonal socket 38.

In some embodiments, the mounting screws 34 may include outer hexagonal heads. In such embodiments, instead of a hexagonal shape, the anti-rotation members 42 may be formed like a nut with a recess having a hexagonal shape engageable with the outer hexagonal head of the mounting screws to be locked against rotation.

In some further embodiments, the mounting screws 34 may include inner star sockets or outer star heads. In such embodiments, the anti-rotation members 42 may be shaped for at least partially matching with an associated screw head 36.

In some embodiments, a screw connection may include screws with different sizes and/or with differently shaped screw heads, such as, for instance, screws with inner hexagonal sockets, screws with outer hexagonal heads, screws with inner star sockets, and/or screws with outer star heads. In such embodiments, there may be provided anti-rotation members 42 having different shapes, but matching with associated screw heads. Hence, each of the screws with different sizes and/or screw heads may be locked against rotation.

In some embodiments, with specific reference to Fig. 3, a further anti-rotation member may be inserted into the inner hexagonal socket of the attaching screw 32 and connected to the connecting member 44 as explained above. The exemplary anti-rotation device 40 may also be used for locking the bolts 12 against rotation.

Although the preferred embodiments of this invention have been described herein, improvements and modifications may be incorporated without departing from the scope of the following claims.

## Claims

1. A method for locking at least two mounting screws (34) against rotation, the at least two mounting screws (34) being configured to connect a first member (30) to a second member (20), each of the two mounting screws (34) having a screw head (36), the method comprising:
engaging an anti-rotation member (42) with an associated screw head (36); and
connecting the anti-rotation members (42) to one another for locking each of the at least two mounting screws (34) against rotation.

2. The method of claim 1, wherein connecting the anti-rotation members (42) to one another includes inserting each of the anti-rotation members (42) into an associated recess (45) provided in a connecting member (44) for positioning the anti-rotation members (42) to one another.

3. The method of claim 2, wherein inserting each of the anti-rotation members (42) into an associated recess (45) includes providing a clearance (46) between an inner circumferential wall of an associated recess (45) and an associated anti-rotation member (42), the method further comprising:
molding potting material (48) into the clearances (46); and
curing the potting material (48) for connecting the anti-rotation members (42) to the connecting member (44).

4. The method of claim 3, wherein the potting material (48) is selected from the group consisting of glue, liquid metal, cast iron, and an epoxy resin.

5. The method of any one of claims 3 or 4, further comprising disposing a sealing member (49) between the connecting member (44) and each screw head (36) for sealing the screw head (36) from the associated clearance (46).

6. The method of any one of the preceding claims, wherein
at least one of the mounting screws (34) has an inner hexagonal socket (38), and
engaging an anti-rotation member (42) with an associated screw head (36) includes inserting an anti-rotation member (42) in an associated inner hexagonal socket (38).

7. The method of any one of the preceding claims, wherein
at least one of the mounting screws (34) has an outer hexagonal head, and
engaging an anti-rotation member (42) with an associated screw head (36) includes putting an anti-rotation member (42) over an associated outer hexagonal head.

8. An anti-rotation device (40) for locking at least two mounting screws (34) against rotation, the at least two mounting screws (34) being configured to connect a first member (30) to a second member (20), each of the two mounting screws (34) having a screw head (36), the anti-rotation device (40) comprising:
at least two anti-rotation members (42) each configured to engage an associated screw head (36); and
a connecting member (44) connecting the at least two anti-rotation members (42) to one another, such that the at least two anti-rotation members (42) are aligned to one another.

9. The anti-rotation device (40) of claim 8, wherein the connecting member (44) includes at least two recesses (45) accommodating an associated anti-rotation member (42) therein.

10. The anti-rotation device (40) of claim 9, further comprising a cured potting material (48) potted within corresponding clearances (46) provided between an inner circumferential wall of an associated recess (45) and an associated anti-rotation member (42) at least partially accommodated within the associated recess (45).

11. The anti-rotation device (40) of claim 10, further comprising an associated sealing member (49) for each anti-rotation member (42), each of the sealing members (49) being configured to seal the associated clearance (46) from the associated screw head (36).

12. The anti-rotation device (40) of claim 11, wherein the sealing member (49) is any one of a sealing ring and a sealing shim.

13. The anti-rotation device (40) of any one of claims 8 to 12, wherein at least one of the at least two anti-rotation members (42) includes a shape configured to engage an associated screw head (36) having an inner hexagonal socket (38).

14. The anti-rotation device (40) of any one of claims 8 to 13, wherein at least one of the at least two anti-rotation members (42) includes a shape configured to engage an associated screw head (36) having an outer hexagonal head.

15. The anti-rotation device (40) of any one of claims 8 to 14, wherein at least one of the at least two anti-rotation members (42) is configured to engage a mounting screw (34) having a size ranging from M4 to M36.
